# EUROPEAN PATENT APPLICATION

(11) **EP 1 538 556 A1**
(43) Date of publication of application: **08.06.2005**
(21) Application number: 04106187.0
(22) Date of filing: 30.11.2004
(51) Int. Cl.: G06K 19/07, G08B 13/24

(54) **Radio frequency identification tags**

(30) Priority: 02.12.2003 US 526400 P
(71) Applicant: Wertsberger, Shalom, South Portland, ME 04106 (US)
(72) Inventor: Wertsberger, Shalom, South Portland, ME 04106 (US)
(74) Representative: Messulam, Alec Moses

(57) **Abstract**

A data transmitting tag adapted to, in response to a deactivation signal, block access to certain segments of the data contained therein. In a preferred embodiment, the tag also detunes at least one resonant circuit therein in order to avoid radiation pollution. A method is also provided to disable certain portions of the tag data, and preferably to verify such disablement.

## Description

### Field of the invention

The invention is directed to the field of RFID tags and more particularly to partial deactivation of such tags.

### Background

Attaching tags containing information to products is becoming increasingly popular. Technologies such a RFID (Radio Frequency Identification) tags allow relatively large amount of information to be attached or embedded within an item. Tags may be broadly divided into two categories: passive or active tags. Active tags contain a power source, while passive tags are being supplied energy from an external source for their operation. The tag may be interrogated by a device that will be referred to in these specifications as an interrogator.

The interrogator generates an interrogation signal that both energizes passive tags, and queries the tag without the need for direct contact. The interrogation signal has predetermined characteristics, e.g. a preset frequency or data content, which activates the tag. Passive tags receive energy from the interrogation signal e.g. by use of a resonant circuit tuned to resonate at the preset frequency, where the energy derived from the circuit is used to power the tag. A small transmitter in the tag transmits data stored in the tag, responsive to activation or other interrogation. Other methods of transmitting the data such as back scatter and the like are also known. Passive tags may be energized and activated by several methods, however a passive tag has to receive the energy from an interrogator or from another source external thereto. Thus a passive tag must have circuitry to collect energy from a remote source.

The use of such tags offers a wide range of advantages to manufacturers and retailers, such as ease of stock management, and prevention of theft in stores. Many other uses have also been contemplated, including a 'global tag' (GTAG) standard for presenting information in a uniform manner to operators worldwide. For simplicity of demonstrating the present invention, the use of tracking consumer products will be used by way of non-limiting example, as deactivation of tags may be useful in many other applications within the envisioned uses of such tags.

The use of tags in this context suffers from two major disadvantages: the first is the effects of undesirable interrogation after a product is purchased. As the information in the tag may be read unbeknown to the purchaser, a significant threat to personal privacy is presented. By way of example, the tag may be attached to an article of clothing, and include such data as size and price information. If a person wearing the article of clothing is being interrogated by a competitor's interrogator, a significant embarrassment may result. Even more threatening to personal privacy, is unauthorized use of such interrogators to find out more personal information about a person such as what medications a person is carrying, taste in products not readily visible, and the like.

A second concern, in addition to the privacy concern, is what shall be referred to hereinafter as 'radiation pollution'. It is clear that in time the proliferation of tags will cause numerous responses from undesirable tags: tags other than the tags the interrogator directed its signal to. For example, if an interrogator is installed at the entrance to a store, many old tags, i.e. tags of previously purchased items, may be present in the interrogator field of operation. The signal from such old tags will cause a significant noise problem that may interfere with the operation of the 'desired' tag. Additionally, the energy absorbed by old tags may deplete the available energy and prevent the activation of the desirable tag.

RFID tags are used for more than one purpose. For example a tag may be attached to a garment such as a shirt, and be used for stock tracking, quality control (e.g. by tracking a manufacturing plant, machine or worker), as in store electronic article surveillance and price verification, and even after a sale, for the like of allowing a washing machine to select a laundry cycle appropriate for this garment. While for privacy or commercial concerns it may be desirable to prevent access to data regarding the former, it is desirable to maintain the data for the washing machine use and the like.

In US provisional patent application No. 60/432,293, filed December 10, 2002, the present inventor disclosed an RFID tag that may be disabled utilising hardware and/or software. This application served as the basis for priority claim to a PCT application PCT/US2003/038609, which was published as WO2004/053721.

US 6,480,110 to Lee et al teaches tuning an antenna of an RFID tag by melting, or blowing open, fusible links. By doing so, the electrical length of an inductor is modified to cause it to resonate at a desired frequency.

### Object of the invention

It is desirable to provide a method for selectively deactivating selected portions of the tag data, while avoiding premature deactivation for example for preventing theft of the article to which the tag is attached prior to purchase and the present invention is directed to providing a solution to this problem.

### Summary of the invention

In its most basic embodiment, the invention comprises a data transmitting tag having a selective deactivation arrangement, in hardware and/or in software, wherein the deactivation arrangement is operable responsive to a deactivation signal, which is preferably encoded. The data is divided into segment that are associated with specific access rights.

Two primary solutions are envisioned for deactivating the tag. The first involves sending a signal that will cause the tag to stop transmitting selected portions of the data or alter the data it is transmitting in selected data portions. The second revolves about disabling a portion or all of the tag circuitry to achieve similar results.

The first solution contemplated above may be achieved by sending a signal to be received by the tag, that will cause it to permanently stop sending out portions of the data stored therein. Such solution may be achieved for example by setting a flag within the memory of the tag that will prevent the tag from responding to future interrogations by disabling access to the selected data segments.

Thus an aspect of the invention comprises a tag having a controller embedded therein, said controller being operative, responsively to a command, to set a condition that will disable future responses to certain interrogations, or responding by only sending the data allowed by the access rights to the specific data segment or segments.

In a preferred embodiment of this aspect of the invention, the controller is a programmable controller and the condition is set as a software flag being tested in future interrogation cycles. Responsive to the flag, the tag may send an indication that the data content has been blocked. Yet even more preferably, the tag will not respond at all to future interrogations of blocked data. Another method is the erasure of data segment from the tag responsive to the deactivating signal. In order to prevent premature deactivation, the deactivation signal is encoded, and only authorized interrogators and/or deactivators may send effective deactivation signal.

While this solution solves the problems identified above it is not the most preferred solution. A tag having only its data transmitting capacity disabled still consumes energy when exposed to an interrogation signal. If only a portion of the data transmitting capacity is disabled, then other signals are still being transmitted, and the problem of noise pollution is merely reduced. It is therefore more desirable to disable a portion of the circuitry of the tag so as to minimize or eliminate power consumption by the tag, and even more preferably, to disable resonance of the tag circuitry at certain interrogation frequencies. There are known methods of altering the frequency response of such tags as described for example by Lee.

Thus there is provided a tag capable of storing and transmitting data which is divided, either logically or physically, into segments. The tag further having a disablement arrangement to disable access to at least one segment in response to reception of a deactivation signal, while leaving at least one segment accessible to future data inquiries. Preferably the deactivation signal is encoded. More preferably, each segment or group of segments have a deactivation signal associated therewith.

In a preferred embodiment, the tag further comprises a hardware, or hardware/software based deactivation arrangement, operable to detune (by altering or disabling) at least one resonant circuit within the tag, where the resonant circuit is used to receive data, transmit data, supply power for the tag or a combination thereof. In the preferred embodiment the deactivation arrangement is constructed to detune the resonant circuit from a first frequency and tune it to a second frequency. In yet another preferred embodiment, the tag comprises a plurality of resonant circuits, and the deactivation arrangement is constructed to deactivate one of said resonant circuits.

In a software based embodiment of the present invention the tag has logic to either flag a segment as blocked, alter a segment data, or erase a segment data, responsive to an encoded deactivation signal.

In yet another aspect of the invention, there is provided a method for selective disablement of access to a portion of data contained in a tag constructed to transmit such data in response to an inquiry signal, the method comprising the steps of transmitting a deactivating signal to the tag, and responsive to reception of the deactivation signal, blocking at least a portion of the data contained within the tag from being transmitted in response to future inquiry signals. Preferably the deactivation signal is encoded. More preferably, the method further comprises the steps of interrogating the tag for data contained therein, receiving tag specific data in response to the interrogation, and formulating the deactivation signal in accordance with the tag specific data.

In the most preferred embodiment of this aspect of the invention the method further comprises the step of essentially permanently detuning a resonant circuit contained within the tag.

Yet another aspect of the invention is to provide a tag that may be read after disablement as described herein, by directly coupling such tag or a portion thereof, to a specialized reader.

### Brief description of the drawings

The invention will now be described further, by way of example, with reference to the accompanying drawings, in which:
Fig. 1 depicts simplified circuitry to affect the preferred embodiment of a tag operative in accordance with the invention.
Fig. 2 depicts simplified circuitry to affect yet another embodiment of tag operative in accordance with the invention, having a plurality of resonant circuits.
Fig. 3 depicts a simplified flow diagram of deactivation in accordance to several aspects of the invention.
Fig. 4 depicts a simplified flow diagram of tag operation after segments of the tag data have been deactivated.

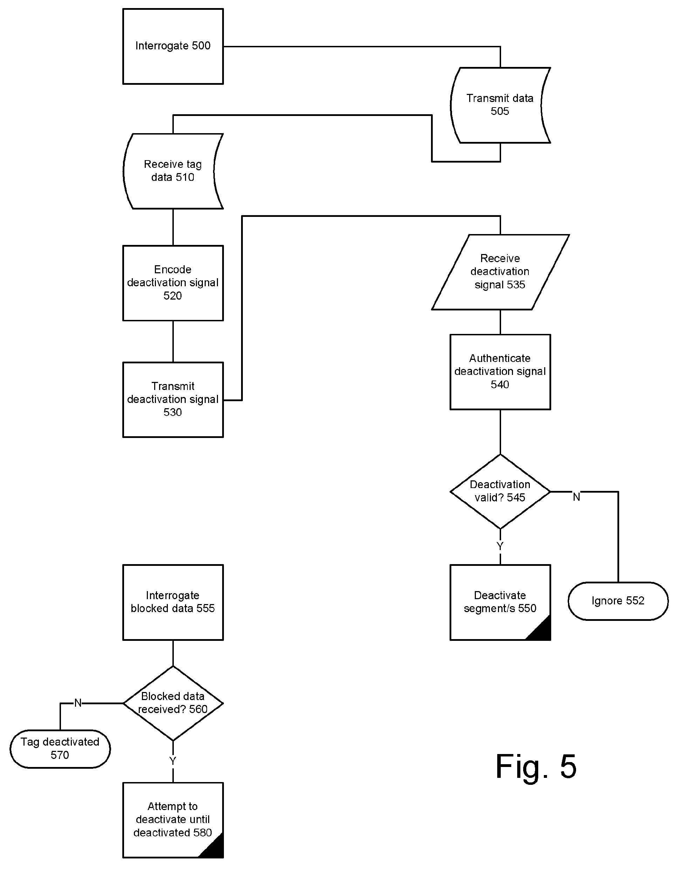

Fig. 5 depicts a method for disabling a portion of the data in a tag, including an optional verification, in accordance with the preferred embodiment of the present invention.

### Detailed Description of the preferred embodiments

Presently, most RFID tag variants are coupled inductively to the interrogator. However capacitive coupling operates in a similar fashion, and the invention extends to such coupling. Similarly light operated coupling is yet another known method. In the case of passive tags, a single coupling may be utilized to power or the tag and communicate therewith. Alternatively, two separate coupling methods may be employed, one for powering the tag e.g. inductive, capacitive, light activation, and the like, and a separate coupling for communication with the tag.
Generally, every coupling such as radio frequency radiating, is appropriate for use in the invention.

To assist in understanding the invention, the following specifications are directed at passive tags that receive their energy from an RF radiated interrogation signal. Such tag may be divided into three major component areas: A resonant circuit, a power supply and a logic portion.

The resonant circuit comprises an antenna and some sort of an inductive/capacitive circuit adapted to resonate at a known frequency range. Oftentimes the antenna is an integral part of the resonant circuit, and sometimes parasitic capacity is utilized for tuning the circuit to the desired frequency. While not strictly a portion of the resonant circuit, for the purpose of these specifications, other transmitting and receiving components that allow the tag to receive or transmit data are considered herein as a portion of the resonant circuit.

The power supply utilizes energy collected by the resonant circuit to power the rest of the tag. Such power supply commonly operates by rectifying the energy received by the resonant circuit. As described above the power supply may be separate from the resonant circuit, such as for example by utilizing light sensitive power cells, while communications occurs via a separate path.

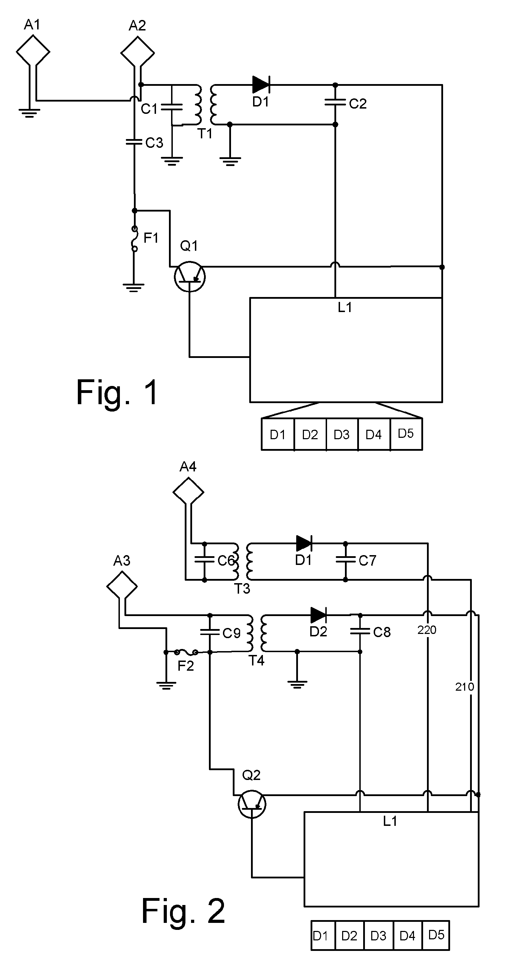

The logic portion is the heart of the RFID tag. It typically comprises memory of some sort, and a controller adapted to perform operations such as responding to interrogation signals, deal with communication protocols, run an application, transmit data, receive data, store data, and the like. The logic portion either contains, or has access to the data, which is segmented into segments such as D1-D5 in Fig. 1. The logic also contains the capacity to identify and decode the access signal or the deactivation signal.

Several software embodiments of software based tag deactivation will be apparent to those skilled in the art once the need for such partial deactivation is made clear by these specifications. In a first software based embodiment of the invention, the data in the tag is segmented into a plurality of segments. The tag is programmed to stop sending data of specific segments in response to future interrogations once the deactivation signal is received for those specific segments. This may be achieved by setting a flag in the memory 350 and in response to future interrogations check if the flag is set 360 and transmit data 370 only when it is not set. Optionally, segments of the tag data may be erased 340 responsive to the deactivating signal.

Another method of limiting access to data segments in the tag is utilizing a differently coded disablement signal for each segment.

Optionally, the tag logic may be similarly instructed to reactivate access to specific data segments, in response to otherwise coded signals.

Yet another embodiment, is a tag that responds by sending different portions of the data in response to a signal specific to that data segment.

A more preferred embodiment of the invention is depicted in Fig. 1. In regular operation, the tag receives energy from antennas A1 and A2, which are fed to resonant circuit comprising of capacitor C1 and an inductor which is a portion of T1. Capacitor C3 is used to isolate between the received signal and the DC power to energize the tag and to deactivate a portion thereof in response to deactivation signal. Energy captured from the secondary winding of T1 is rectified by diode D1 and filtered by capacitor C2. The energy collected is used to power the tag. It should be noted tat this power supply arrangement is but one simplified arrangement of many known methods of providing power to the tag. This method was selected merely for simplicity of explanation. It is recognized however that in practical use many tags utilize a far simpler power supply arrangement in order to reduce cost, increase efficiency, and the like. While many arrangements are known for collecting energy and utilizing it to power the tag, the invention extends to all such arrangements, as well as to active tags which carry their own power supply.

Logic L1 is provided to activate Q1 which acts as controllable short. Responsive to a deactivation signal received from the transmitting antenna, the logic causes Q1 to conduct in such a way as to cause the fusible link F1 to permanently change state to an open circuit (commonly known as 'blowing' the fuse). Those skilled in the art will realize that the resonant circuit characteristics will be immediately changed, as antenna A2 becomes inactive. Therefore, the tag will be unable to receive power at the original operating frequency. The logic is also constructed to realize such disconnection, either by the inquiry signal characteristics, or by software, such as using a flag, or by testing the status of the fusible link. By altering the resonant frequency, the tag becomes 'inert' to the original frequency and thus does not cause an energy drain when being interrogated at that frequency. However the tag is still active for in the resonant frequency of the new circuit dictated by A1.

The role of Q1 may be achieved by many devices such as, but not limited to, triac, SCR, UJT, micro relay, or any other component characterized by causing high current to blow the fusible link F1 when the component or a combination of components is activated.

It will also be clear to those skilled in the art that fusible link F1 is merely a convenience. It may indeed be implemented a fuse, but may also be implemented as an active or passive component that becomes a path of high resistance preventing normal tag operation, or as a path of low resistance, preventing tag operation by short circuiting of one or more of the resonant circuit in the tag. The fusible link may even be implemented directly within the shorting element itself, such as by a diode having an appropriate capacitance. Additional disablement methods are known, such as electrically activating a chemical that will disable or alter the resonant characteristics the tag at one frequency.

Other detuning arrangements comprise removing or altering reactance elements such as resistors, inductors, capacitors and the like from the resonant circuit. Due to the large variety of options, those skilled in the art will recognise that such arrangements are merely a matter of engineering choice, and act equivalently.

While it is possible to detune or otherwise deactivate the resonant circuit by short-circuiting it, it is preferable to create an open circuit, such as the one that will occur if Q1 is activated by the logic L1 to cause fusible link F1 to open.

When the resonant circuit is detuned, software recognizes that fact by, for example, sensing the short circuited and/or open circuited condition, or by sensing that the resonant circuit creates a mismatched impedance at the previously tuned frequency. In response, only certain portions of the data are transmitted utilizing the frequency for which the de-tuned resonant circuit is designed for.

An alternate method utilizes a plurality of antennas as seen in Fig. 2. In this embodiment the tag has a plurality of antennas (two shown) A3 and A4. Each antenna is tuned to a different frequency. Each antenna is capable of powering the tag, by sharing a power supply circuit (not shown) or by utilizing independent power supply circuits as shown. The logic L1 is capable of recognizing which circuit is providing power by incoming lines 210 and 220 respectively. Thus the logic L1 may be able to block a portion of the data in response to the activating frequency. Clearly, other methods for sensing the interrogating frequency may be implemented such as frequency discrimination and the like. However this preferred embodiment responds to a deactivation signal by also disabling reception of one of the antenna circuits by altering the circuitry. In response to the encoded deactivation signal, transistor Q2 is activated and the fusible link F2 becomes a permanent open circuit, effectively disabling antenna A3. Certain portions of the data are still available when the tag is interrogated by the frequency of the resonant circuit of antenna A4 and capacitor C6.

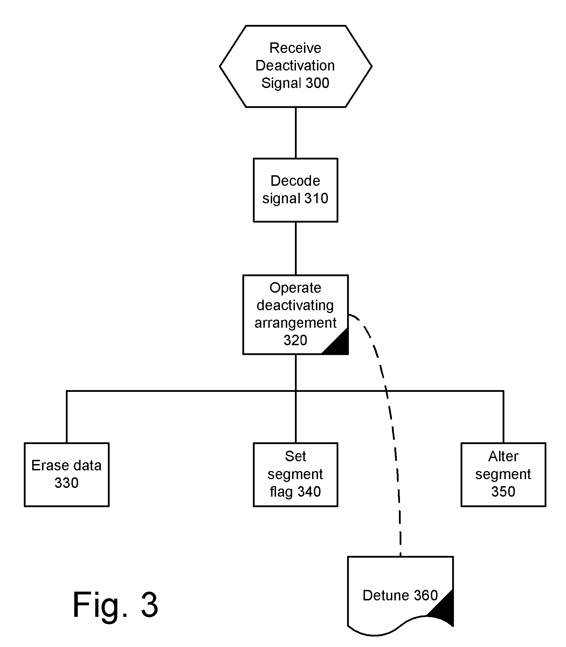

Fig. 3 depicts a simplified flow diagram where responsive to receiving a deactivation signal 310 the deactivation arrangement is operated 320. It is important to note that this figure represents both software only and hardware versions of the tag.

When it is desired to block the information in specific segments of the tag, (e.g. after the item the device is coupled to is sold and size, price, and similar information are no longer needed) an encoded deactivation signal is sent to the tag. In order to prevent unintended (or malicious) deactivation, it is preferable that a deactivation signal be an encoded signal, however clearly an un-encoded signal will work as well. Such encoding may be at least partially derived from information within the tag, or a deactivation may be kept as the prerogative of authorized interrogators, as required. Thus the deactivation event itself may be reported to an interested party, such as the report of a sale to a manufacturer.

Upon reception of the deactivation signal 300 the signal is decoded 310 and the deactivation arrangement is operated 320. The deactivation arrangement may take several forms such as erasing the data at a specific segment/s 330, setting a software flag preventing the transmission of data from blocked segment/s 340, or altering the data 350, for example to indicate a properly sold item, while removing certain information in the tag, e.g. price, size, and the like.

If the tag supports a hardware disablement arrangement similar to the ones described above, the disablement also detunes at least one of the reception resonant circuits. By doing so, the tag stops consuming energy and transmitting information at the frequency of the detuned circuit.

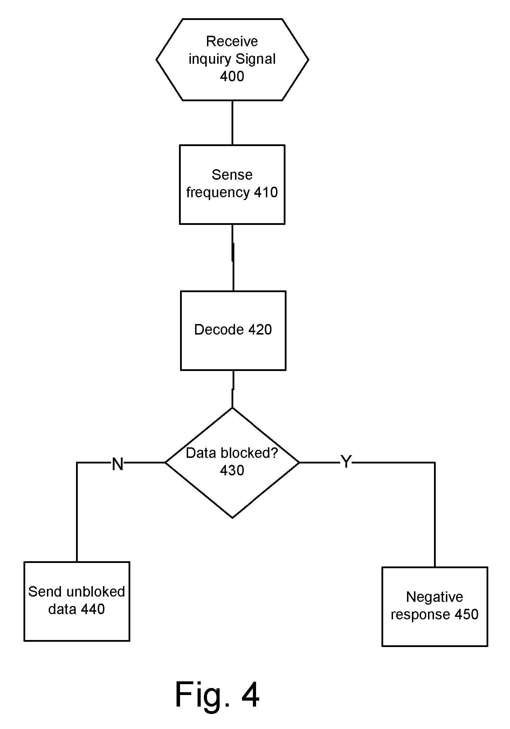

Fig. 4 represents a simplified block diagram of the tag operation upon receiving an inquiry signal after a one of the tag frequencies have been disabled. Upon receiving the inquiry signal 400 the inquiry signal frequency is sensed 410. After the inquiry is decoded 420 (if the signal is encoded) the software determines if the data is blocked 330. If it is, a negative response is generated 450. The negative response may be transmitting a signal that the data has been blocked, sending blank data, transmitting only partial data, avoiding any transmission, and the like. If the data is not blocked, it is transmitted 440. Use of a similar method may be operated for software based blocked tag will be cleared to those skilled in the art and is thus not shown.

In order to prevent inadvertent disablement of tags, it is preferable that the deactivation signal will be tag specific. In order to achieve such disablement, the tag is first interrogated 500. The tag transmits the data 505 and once the data is received 510, a deactivation signal specific for the tag or the data carried by the tag is created and encoded 520. The deactivation signal is transmitted to the tag 530. Upon reception of the deactivation signal 535, the logic in the tag attempts to authenticate the deactivation signal 540. Such authentication may be made preferably by having the deactivation signals codes already stored in the tag, or by computing the proper codes. If the deactivation signal is valid 545, the data segment or segments are blocked for future interrogation 550. Otherwise, the deactivation signal is ignored 552. Optionally, the interrogator sends a second inquiry signal, requesting data from the blocked segment 555. If the blocked data is received 560 it signifies that the disablement operation failed, and other attempts are made until the disablement is successful 580, or any other desired activity (e.g. activating an alarm) is taken. If no data is received, or if a signal is received that the requested data is blocked, or if the data has been satisfactory altered, the tag deactivation was successful.

It is sometimes desirable to have access to the data after the tag has been disabled. Such a case is when, for example, the customer attempts to return the tag to the store. If this is the case, certain encoded signals may override the blocking previously imposed and the data will be transmitted by whatever available means.

It will be clear to those skilled in the art that the logical divisions provided above are but one example of how to make the invention, and that one skilled in the art would be able to divide the provided functionality in many ways and circuit designs, given the flexible nature of electronics, once the need for the invention is made clear as described above.

## Claims

1. A data transmitting tag having a selective deactivation arrangement, the tag comprising:
a plurality of data segments; and
a segment deactivation arrangement operative to deactivate access to at least one segment in response to a deactivation signal.

2. A data transmitting tag as claimed in claim 1, wherein said deactivating arrangement is operative to alter the frequency response characteristics of said tag.

3. A data transmitting tag as claimed in claim 1 or 2, wherein said tag comprises a resonant circuit, and wherein said deactivating arrangement is operative to detune said resonant circuit.

4. A data transmitting tag as claimed in any preceding claim, wherein the tag comprises a plurality of resonant circuits, and the deactivation arrangement is constructed to deactivate at least one of said resonant circuits.

5. A data transmitting tag as claimed in claim 3 or 4, wherein said resonant circuit is detuned from a first frequency to a second frequency, and wherein said first frequency becomes disabled as an interrogation frequency.

6. A data transmitting tag as claimed in any preceding claim, wherein said deactivation arrangement is operative to disable or alter a portion of the tag circuitry.

7. A data transmitting tag as claimed in any preceding claim, wherein at least one segment or a group of segments from said plurality of segments, has a deactivation signal associated therewith.

8. A data transmitting tag as claimed in any preceding claim, wherein said deactivation signal is encoded.

9. A data transmitting tag as claimed in any preceding claim, wherein said deactivation arrangement is reversible.

10. A data transmitting tag as claimed in claim 10, wherein said deactivation arrangement is reversible in responsive to an encoded signal.

11. A data transmitting tag as claimed in any preceding claim wherein the tag is readable after disablement by directly coupling at least a portion of the tag to a specialized reader.

12. A data transmitting tag as claimed in claim 1, further comprising a controller, said controller being operative in responsive to said deactivation signal to set a software condition that will disable future response to an interrogation signal requesting access to data in a deactivated segment.

13. A data transmitting tag as claimed in claim 13, wherein set condition comprises altering or erasing at least a portion of the data in said segment.

14. A method for selective disablement of access to a portion of data contained in a tag constructed to transmit such data in response to an inquiry signal, the method comprising the steps of:
transmitting a deactivating signal to the tag; and,
responsive to reception of the deactivation signal, blocking at least a portion of the data contained within the tag from being transmitted in response to future inquiry signals.

15. A method for selective disablement of access to a portion of data contained in a tag as claimed in claim 14, further comprising the steps of:
interrogating the tag for data contained therein;
receiving tag specific data in response to the interrogation; and,
formulating the deactivation signal in accordance with the tag specific data.

16. A method for selective disablement of access to a portion of data contained in a tag as claimed in claim 14 or 15, wherein the method further comprises the step of essentially permanently detuning a resonant circuit contained within the tag.

## Amended claims

### Amended claims in accordance with Rule 86(2) EPC.

**1.** A data transmitting tag having a selective deactivation arrangement, the tag comprising:
a plurality of data segments; and
a segment deactivation arrangement operative to selectively deactivate access to at least one segment in response to a deactivation signal, while leaving at one other segment in activatable state.

**2.** A data transmitting tag as claimed in claim 1, wherein said deactivating arrangement is operative to alter the frequency response characteristics of said tag.

**3.** A data transmitting tag as claimed in claim 1 or 2, wherein said tag comprises a resonant circuit, and wherein said deactivating arrangement is operative to detune said resonant circuit.

**4.** A data transmitting tag as claimed in any preceding claim, wherein the tag comprises a plurality of resonant circuits, and the deactivation arrangement is constructed to deactivate at least one of said resonant circuits.

**5.** A data transmitting tag as claimed in claim 3 or 4, wherein said resonant circuit is detuned from a first frequency to a second frequency, and wherein said first frequency becomes disabled as an interrogation frequency.

**6.** A data transmitting tag as claimed in any preceding claim, wherein said deactivation arrangement is operative to disable or alter a portion of the tag circuitry.

**7.** A data transmitting tag as claimed in any preceding claim, wherein at least one segment or a group of segments from said plurality of segments, has a deactivation signal associated therewith.

**8.** A data transmitting tag as claimed in any preceding claim, wherein said deactivation signal is encoded.

**9.** A data transmitting tag as claimed in any preceding claim, wherein said deactivation arrangement is reversible.

**10.** A data transmitting tag as claimed in claim 10, wherein said deactivation arrangement is reversible in responsive to an encoded signal.

**11.** A data transmitting tag as claimed in any preceding claim wherein the tag is readable after disablement by directly coupling at least a portion of the tag to a specialized reader.

**12.** A data transmitting tag as claimed in claim 1, further comprising a controller, said controller being operative in responsive to said deactivation signal to set a software condition that will disable future response to an interrogation signal requesting access to data in a deactivated segment.

**13.** A data transmitting tag as claimed in claim 13, wherein set condition comprises altering or erasing at least a portion of the data in said segment.

**14.** A method for selective disablement of access to a portion of data contained in a tag constructed to transmit such data in response to an inquiry signal, the method comprising the steps of:
transmitting a deactivating signal to the tag; and,
responsive to reception of the deactivation signal, blocking only a portion of the data contained within the tag from being transmitted in response to future inquiry signals.

**15.** A method for selective disablement of access to a portion of data contained in a tag as claimed in claim 14, further comprising the steps of:
interrogating the tag for data contained therein;
receiving tag specific data in response to the interrogation; and,
formulating the deactivation signal in accordance with the tag specific data.

**16.** A method for selective disablement of access to a portion of data contained in a tag as claimed in claim 14 or 15, wherein the method further comprises the step of essentially permanently detuning a resonant circuit contained within the tag.
